# FASCICULE DE BREVET EUROPEEN

(11) **EP 3 298 373 B1**
(45) Date de publication et mention de la délivrance du brevet: **26.02.2020**
(21) Numéro de dépôt: 16729030.3
(22) Date de dépôt: 18.05.2016
(51) Int. Cl.: G01L 5/24, G01L 1/02, B25B 29/02

(54) **DISPOSITIF DE MESURE D'EFFORT POUR UN SYSTÈME DE SERTISSAGE D'UN ÉLÉMENT SUR UNE PIÈCE**
VORRICHTUNG ZUR MESSUNG DER AXIALEN KRAFT AUF EINEM BEFESTIGUNGSELEMENT
DEVICE FOR THE MEASUREMENT OF THE AXIAL FORCE APPLIED TO A FASTENER

(30) Priorité: 18.05.2015 FR 1554436
(43) Date de publication de la demande: 28.03.2018
(73) Titulaire: Bollhoff Otalu S.A., 73490 La Ravoire (FR)
(72) Inventeur: MACCHIERALDO, David, 73170 Traize (FR); GARGALLO, Jordi, 73000 BaSSENS (FR); MATTLER, Claude, 73100 Mouxy (FR)
(74) Mandataire: Talbot, Alexandre
(86) Numéro de dépôt international: PCT/FR2016/051166
(87) Numéro de publication internationale: WO 2016/185134

(56) Documents cités:
- GB-A- 1 309 547
- JP-A- 2002 267 555
- US-A1- 2011 184 666

## Description

### Domaine technique de l'invention

La présente invention concerne le domaine des dispositifs de sertissage pour écrou et goujons à sertir sur une pièce, notamment les dispositifs de sertissage mettant en œuvre la pose à l'effort. Elle a pour objet, un dispositif de mesure de l'effort appliqué par de tels dispositifs de sertissage.

### État de la technique

Le sertissage est un procédé simple et largement utilisé pour l'assemblage de deux pièces. Le dispositif de sertissage pour écrou ou goujon à sertir, ou encore sertisseuse, permet de réaliser des opérations de vissage, sertissage et dévissage de l'écrou ou du goujon.

Certaines sertisseuses réalisent des sertissages d'écrous ou de goujons en mettant en œuvre une opération de pose à l'effort. La valeur de l'effort à appliquer est préalablement définie au niveau de la sertisseuse en fonction de l'application et de la pièce à sertir sur son support. De manière générale, les valeurs d'effort s'échelonnent de 3,5 kN à 40 kN, pour les cas usuels, et peuvent atteindre, exceptionnellement, 60 kN.

L'effort préalablement réglé par la sertisseuse, est alors appliqué systématiquement et de manière répétable. Toutefois, l'effort appliqué par la sertisseuse pour assembler deux pièces doit être contrôlé régulièrement et directement au niveau de la sertisseuse. Ce contrôle régulier permet de garantir la qualité de l'opération de sertissage et de vérifier qu'il n'y a pas de dérive par usure de certaines pièces et que le processus de sertissage est répétable, capable et suffisant.

Pour contrôler l'effort appliqué par une sertisseuse des dispositifs de mesure d'effort utilisant des cellules piézoélectriques peuvent être utilisés. Ce type de dispositifs à base de cellules piézoélectriques nécessite l'utilisation d'amplificateurs et de systèmes électroniques complexes pour traiter et traduire l'information piézoélectrique en une valeur exploitable par l'utilisateur. D'autre part, le moyen de mesure d'effort à base de cellules piézoélectriques est un moyen très complexe, difficile à fabriquer, et de ce fait est un moyen coûteux, en comparaison au prix d'une sertisseuse classique.

Le document appartenant à l'art antérieur US2011/184666 divulgue un dispositif de mesure destiné à assembler un élément avec une grande force de fixation en utilisant le vissage d'un écrou sur un boulon. Le boulon subit une force de traction axiale par un tendeur. Le tendeur comporte un piston en acier, monté axialement de manière mobile dans une chambre d'un logement. Un manomètre relié fluidiquement à la chambre permet de mesurer la pression due à la force de traction transmise sur le piston à travers le boulon serré.

### Objet de l'invention

Il existe un besoin de prévoir un dispositif de mesure d'effort adapté aux dispositifs de sertissage par effort, compact, nomade, et capable de mesurer un effort en pic de manière fiable et efficace.

On tend à satisfaire ce besoin et à pallier les inconvénients cités ci-dessus en prévoyant un dispositif de mesure d'effort appliqué par un appareil de pose d'un élément à sertir, ledit appareil étant muni d'une tige filetée ayant un filetage interne ou externe. Le dispositif selon l'invention comporte :
- une chambre hydraulique comportant un fluide et s'étendant selon un axe longitudinal ;
- un piston configuré pour coulisser à l'intérieur de la chambre hydraulique selon ledit axe longitudinal ;
- un connecteur fileté fixé au piston, le connecteur fileté ayant un filetage externe ou interne configuré pour que la tige filetée se visse sur le connecteur fileté, de sorte que la tige filetée puisse imposer un effort axial sur le piston entraînant une course du piston, selon ledit axe longitudinal, dans la chambre hydraulique ;
- un manomètre communiquant avec la chambre hydraulique, configuré pour mesurer une pression au sein de la chambre hydraulique créée par l'effort axial appliqué au piston par la tige filetée de l'appareil de pose.

Selon l'invention, le dispositif comporte aussi une enclume destinée à recevoir un contre-appui de l'appareil de pose de sorte à verrouiller l'appareil de pose sur le dispositif en vissant la tige filetée sur le connecteur fileté et en plaçant le contre-appui contre l'enclume.

De manière préférentielle, le dispositif comporte également un afficheur connecté au manomètre, l'afficheur étant configuré pour retranscrire la pression mesurée par le manomètre en une valeur de l'effort axial.

Préférentiellement, le piston et la chambre hydraulique sont configurés de sorte que le piston puisse avoir une course selon l'axe longitudinal d'au moins 0,2 mm.

Selon une alternative, le connecteur fileté est formé par une portion du piston, de sorte que le connecteur fileté et le piston forment une pièce monobloc.

Selon un mode de réalisation avantageux, le dispositif est muni d'un jeu de pièces interchangeables, chaque pièce du jeu étant configurée pour former le connecteur fileté. De manière préférentiel, le jeu de pièces interchangeables comporte des pièces adaptées à recevoir la tige filetée ayant un profil de filetage choisi parmi : un profil sapin, un profil carré, un profil tronqué, un profil conique ou un profil à pas décalés.

Selon un mode de réalisation, le dispositif est muni d'un accumulateur électrique configuré pour alimenter en énergie électrique des éléments du dispositif de mesure.

Selon une alternative, le piston et la chambre hydraulique sont agencés de sorte que l'effort axial imposé au piston entraîne une augmentation de la pression ou une diminution de la pression dans la chambre hydraulique.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
- les figures 1A et 1B représentent, de manière schématique, en vue de coupe, des modes de réalisation d'un dispositif de mesure d'effort pour un système de sertissage d'un élément sur une pièce ;
- la figure 2 représente, en vue en perspective éclatée, un exemple de réalisation du dispositif de mesure d'effort ;
- les figures 3A et 3B représentent de manière schématique, en vue de coupe, un mode de réalisation du connecteur et du piston du dispositif de mesure d'effort ;
- les figures 4A et 4B représentent de manière schématique, en vue de coupe, des modes de réalisation du connecteur du dispositif de mesure d'effort ;
- la figure 5 représente, de manière schématique, en vue de coupe, un autre mode de réalisation du dispositif de mesure d'effort ;
- la figure 6 représente, en vue normée, un mode de réalisation du dispositif de mesure d'effort.

### Description de modes de réalisation préférentiels de l'invention

Il existe un besoin de prévoir un dispositif de mesure d'effort adapté aux dispositifs de sertissage par effort, capable de mesurer un effort en pic de manière fiable et efficace.

Un dispositif de mesure d'effort déjà existant et utilisant une cellule piézoélectrique est encombrant et ne peut être portatif. En outre, cette solution technique n'est pas adaptée à la mesure d'un effort en pic, autrement dit, un effort obtenu en un temps très court. En effet, la cinématique liée au sertissage est très rapide. Le tirant de la sertisseuse passe d'un état de repos à la valeur d'effort en moins d'une seconde. Ainsi, lorsqu'un effort est appliqué sur une cellule d'effort indéformable, telle qu'une cellule piézoélectrique d'un dispositif de mesure, un effet « choc » est appliqué. Cet effet « choc » peut biaiser la mesure de l'effort et impacter sa fiabilité.

Pour fournir une mesure fiable et précise d'un effort en pic appliqué par un appareil de pose d'un élément à sertir, il est avantageux d'utiliser un dispositif de mesure d'effort adapté à ce type d'appareil tout en étant nomade, compact et facile à fabriquer.

On tend à satisfaire ces exigences en prévoyant un dispositif de mesure d'effort tirant profit de la transformation de l'effort axial appliqué par l'appareil de pose en une pression hydraulique, tout en permettant à l'appareil de pose d'effectuer une course-déplacement lors de la mesure. Un dispositif de mesure autorisant une telle possibilité d'une course-déplacement, permet de réaliser une mesure de l'effort de manière réaliste dans les conditions d'opération réelles de l'appareil de pose.

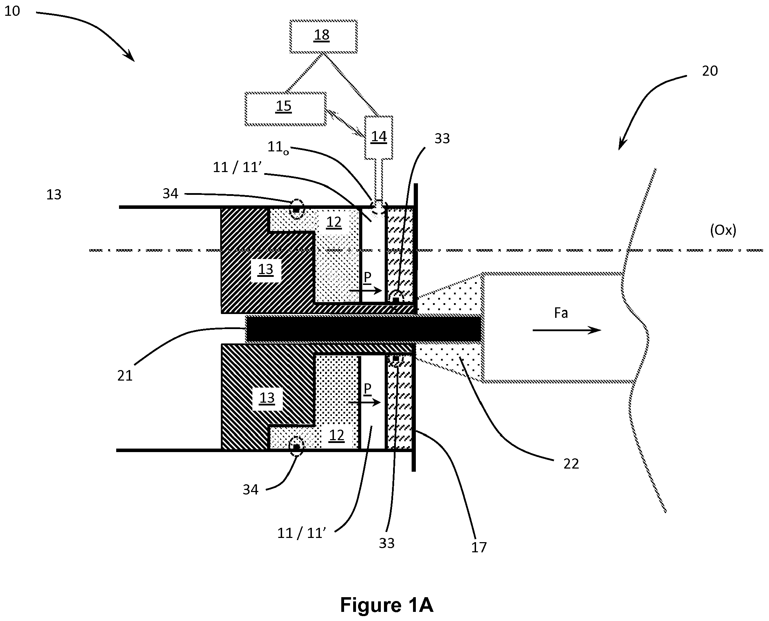

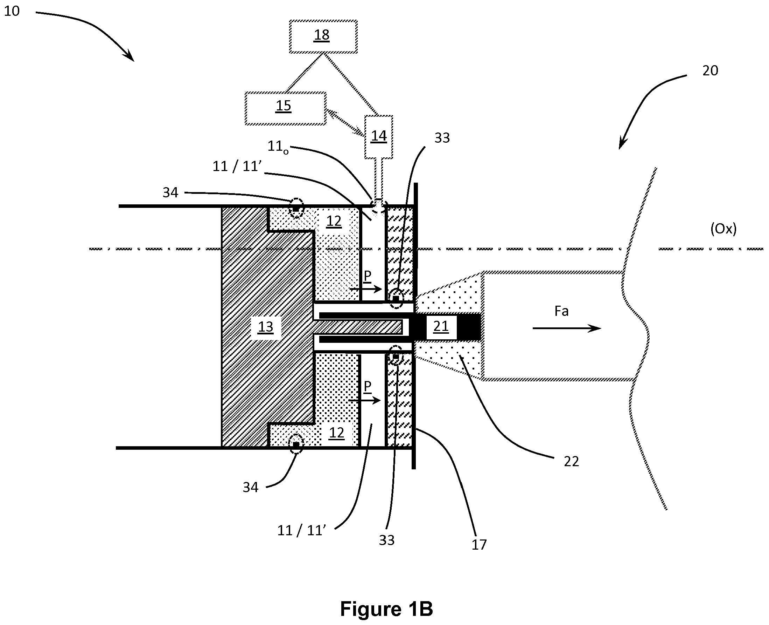

La figure 1 illustre de manière schématique un dispositif de mesure 10 d'un effort appliqué par un appareil de pose 20 d'un élément à sertir. Le dispositif de mesure 10 est compatible avec les appareils de pose 20 munis d'une tige filetée 21 ayant un filetage externe (cf. figure 1A), ou les appareils de pose 20 munis d'une tige filetée 21 ayant un filetage interne autrement dit munis de douilles taraudées (*cf*. figure 1B).

Le dispositif de mesure 10 comporte une chambre hydraulique 11 coopérant indirectement avec la tige filetée 21 de l'appareil de pose 20, pour transformer l'effort appliqué par l'appareil de pose 20, via la tige 21, en une pression hydraulique. Par ailleurs, la chambre hydraulique 11 s'étend selon un axe longitudinal (Ox) et comporte préférentiellement un fluide 11' incompressible.

En outre, le dispositif de mesure 10 comporte un piston 12 configuré pour coulisser à l'intérieur de la chambre hydraulique 11. Le mouvement de coulissement du piston 12 à l'intérieur de la chambre hydraulique s'effectue selon l'axe longitudinal (Ox).

La chambre 11 comporte un orifice 11o permettant d'introduire et/ou d'évacuer un fluide, notamment le fluide incompressible 11', pendant le déplacement du piston 12 dans la chambre hydraulique 11. L'étanchéité entre la chambre hydraulique 11 et le piston 12 est avantageusement réalisée par des joints 33 et 34 configurés pour permettre un fonctionnement et une montée en pression au sein de la chambre hydraulique 11. En outre, les joints 33 et 34 permettent la protection du dispositif 10 des risques d'introduction de pollution.

Pour permettre la mesure d'un effort appliqué par l'appareil de pose 20, le dispositif de mesure 10 dispose d'un moyen destiné à verrouiller la tige 21 dudit appareil 20 sur le dispositif 10. Ainsi, le dispositif de mesure 10 comporte un connecteur fileté 13 fixé au piston 12, autrement dit, solidaire du piston 12. Le connecteur 13 a un filetage interne (taraudage) ou un filetage externe (*cf*. respectivement les figure 1A, et 1B), et il est configuré pour que la tige 21 se visse sur le connecteur 13. De préférence, le connecteur 13 est introduit dans une zone évidée du piston 12.

Le connecteur 13 est adapté pour recevoir, une tige ayant un filetage externe ou une douille taraudée 21 de l'appareil de pose 20. Le connecteur 13 a ainsi un filetage correspondant. Autrement dit, le connecteur 13 peut être adapté aux différents types de filetages pour permettre une utilisation simple et efficace du dispositif de mesure avec les différents appareils de pose.

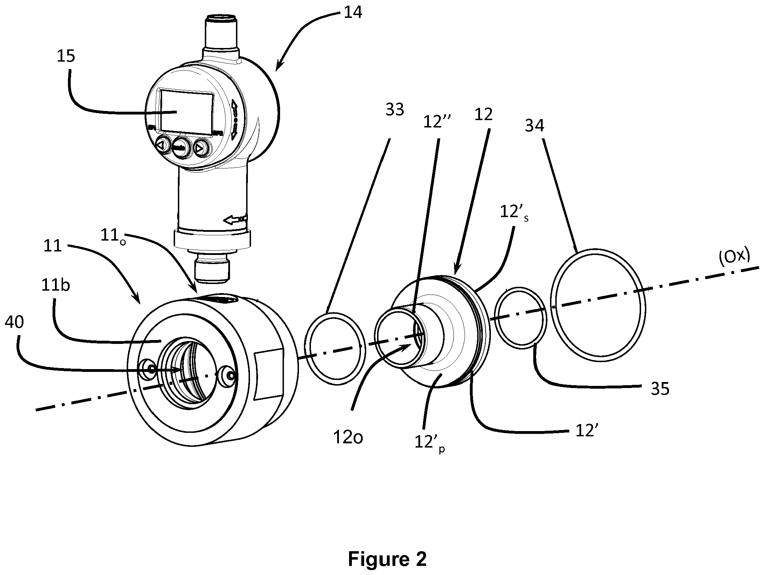

Selon un mode de réalisation préférentiel illustré à la figure 2, la chambre hydraulique 11 a préférentiellement la forme d'un cylindre creux ayant comme base une couronne 11b et comme axe de révolution, l'axe longitudinal (Ox). La couronne 11b peut être une couronne carrée, hexagonale, ou toute autre forme géométrique à base de deux contours, préférentiellement concentriques. Ici, la couronne 11b est une couronne circulaire plane. En outre, la chambre annulaire 11 comporte un premier trou 40, préférentiellement de forme cylindrique conformé de sorte que la tige 21 de l'appareil de pose 20 puisse pénétrer dans le trou 40.

Le piston 12 comporte une première portion 12' traversée par une ouverture 12o, configurée pour être alignée avec le trou 40, de sorte que la tige 21 puisse pénétrer l'ouverture 12o via le trou 40. La première portion 12' est dimensionnée de sorte qu'elle coulisse dans la chambre 11.

De plus, la première portion 12' comporte une paroi 12'p configurée pour être en contact avec le fluide incompressible 11' dans la chambre 11, et comporte également une surface 12's, opposée à la paroi 12'p, selon l'axe (Ox). La surface 12's est configurée de sorte à être préférentiellement, au moins partiellement, en contact avec le connecteur 13. Selon cet exemple de réalisation, la première portion 12' a la forme d'un cylindre creux.

Par ailleurs, le piston 12 comporte une deuxième portion 12", délimitant l'ouverture 12o et ayant préférentiellement la forme d'un cylindre creux dont l'axe de révolution est l'axe longitudinal (Ox). La deuxième portion 12" est configurée de manière à coulisser dans le trou cylindrique 40. Les première et deuxième portions 12' et 12" sont solidaires et sont disposés de sorte que la première portion 12' forme un épaulement et une embase pour la deuxième portion 12".

Le dispositif 10 comporte également un ensemble de joints, notamment les joints 33, 34 et le joint torique 35 disposés entre les portions du piston 12' et 12" d'une part et la chambre hydraulique 11 de sorte que le piston 12' puisse coulisser de façon étanche dans la chambre annulaire 11.

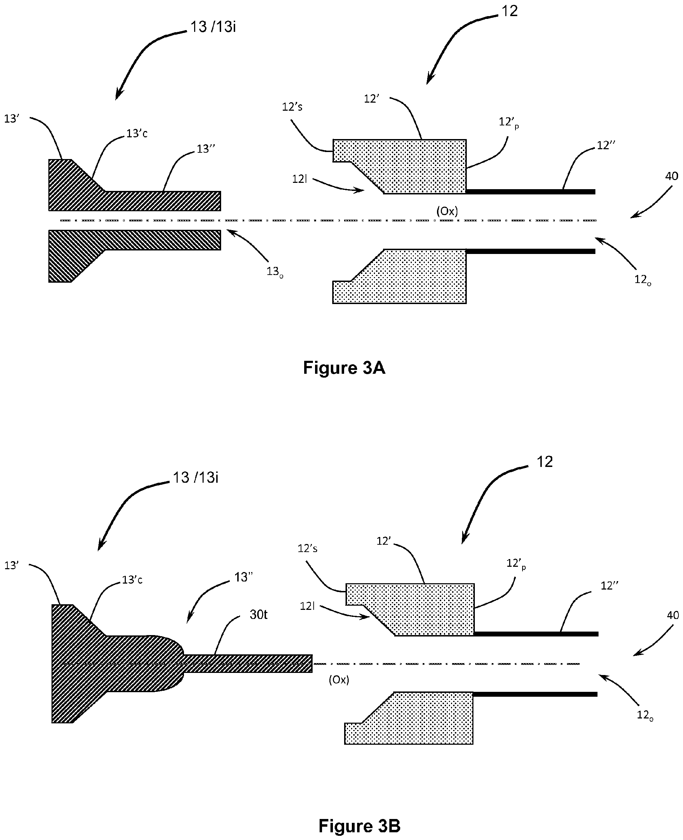

Le connecteur 13 est configuré de sorte à être fixé au piston 12, préférentiellement, au niveau de la surface 12's et/ou au niveau de la deuxième portion 12", par exemple dans l'ouverture 12o. De manière préférentielle, le connecteur 13 comporte une embase 13' et une portion longitudinale 13" (cf. figures 3A et 3B). L'embase 13' et la portion longitudinale 13" sont solidaires. Les éléments 13' 13" peuvent être reliés par un épaulement ou encore, de manière préférentielle, par un chanfrein 13'c (cf. figures 3A et 3B).

La portion longitudinale 13" est configurée de sorte à pouvoir être disposé dans l'ouverture 12o et de ce fait, dans le trou 40 également. Le chanfrein 13c est configuré pour venir en buté contre la surface 12s.

Selon un mode de réalisation illustré à la figure 3A, la portion longitudinale 13" comporte un deuxième trou 13o, débouchant ou borgne, comportant le filetage interne du connecteur 13. Le deuxième trou 13o s'étend le long de l'axe longitudinal (Ox). Le connecteur 13 est alors configuré pour qu'une tige 21 ayant un filetage externe puisse se visser sur le connecteur 13.

Selon un autre mode de réalisation illustré à la figure 3B, la portion longitudinale 13" comporte une tige 30t disposée à l'extrémité opposée à l'embase 13'. La tige 30t a un filetage externe, autrement dit le filetage externe du connecteur 13. Le connecteur 13 est alors configuré pour qu'une tige 21 ayant un filetage interne, autrement dit un taraudage, puisse se visser sur le connecteur 13.

Le connecteur 13 peut être fixé par tout moyen connu au piston 12, par exemple, par encliquetage, par vissage, etc. Préférentiellement, le piston 12 comporte au niveau de la surface 12's un logement 12l configuré pour abriter l'embase 13' du connecteur 13 (cf. figures 3A et 3B).

Selon un mode de réalisation préférentiel, le dispositif de mesure d'effort 10 comporte un jeu de pièces interchangeables 13i, chaque pièce 13i du jeu étant configurée pour former le connecteur fileté 13 (cf. figures 3A et 3B). Le jeu peut comporter des pièces 13i adaptées à coopérer avec la tige filetée 21 ayant un type spécifique de filetage avec des dimensions spécifiques. Préférentiellement, les pièces 13i sont configurées pour coopérer avec des tiges filetées 21 ayant un filetage interne ou externe non standardisé, ou standardisé avec un filetage métrique compris entre M3 et M16.

En outre, le jeu de pièces 13i comporte avantageusement des pièces adaptées à recevoir des tiges filetées 21 ayant un filetage avec un profil choisi parmi une liste non exhaustive comportant : un profil sapin, un profil carré, un profil tronqué, un profil conique, et un profil à pas décalé.

Autrement dit, le jeu de pièces 13i comporte autant de pièces (filetées ou taraudées) que de versions de tiges 21 de l'appareil de pose 20, de dimensions différentes et/ou de formes différentes.

Le dispositif 10 peut avantageusement être utilisé pour différentes sertisseuses 20, autrement dit, le dispositif de mesure ne nécessite pas un réglage particulier du tirant et de l'enclume de la sertisseuse 20. Ainsi, le dispositif de mesure 10 permet avantageusement une mesure rapide de manière à ne pas perturber le bon déroulement des opérations de sertissage, notamment celles réalisées dans une chaîne de montage.

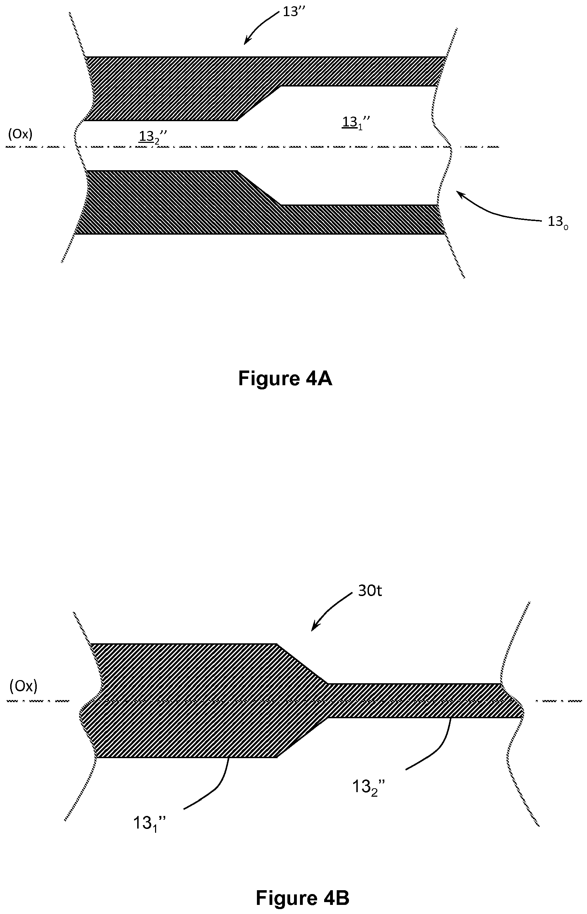

Selon un mode de réalisation particulier représenté aux figures 4A et 4B, la portion longitudinale 13" du connecteur 13 comporte, avantageusement, au moins deux étages successifs 13₁" et 13₂" dont les dimensions transversales sont décroissantes en passant d'un étage au suivant, selon un sens prédéfini et selon la direction de l'axe longitudinal (Ox).

Selon un premier exemple de réalisation illustré à la figure 4A, le connecteur 13 est un connecteur taraudé, configuré pour coopérer avec une tige 21 ayant un filetage externe. Le deuxième trou 13o du connecteur taraudé 13 comporte au moins deux étages 13₁" et 13₂" taraudés ayant des sections transversales et des filetages métriques qui décroissent selon un sens prédéfini correspondant au sens de l'introduction de la tige filetée 21 dans le dispositif de mesure 10. A titre d'exemple, le premier étage 13₁" a un taraudage adapté avec un filetage métrique M16, et le deuxième étage 13₂" a un taraudage adapté au filetage métrique M14.

Selon un deuxième exemple de réalisation illustré à la figure 4B, le connecteur 13 est un connecteur ayant un filetage externe, configuré pour coopérer avec une tige 21 ayant un filetage interne, autrement dit, une tige taraudée. La tige 30t du connecteur 13 comporte au moins deux étages 13₁" et 13₂" filetés ayant des sections transversales décroissantes, autrement dit, des filetages métriques décroissants selon un sens prédéfini correspondant au sens contraire de l'introduction de la tige filetée 21 dans le dispositif de mesure 10. A titre d'exemple, le premier étage 13₁" a un filetage métrique M16, et le deuxième étage 13₂" a un filetage métrique M14.

Selon un troisième exemple de réalisation (non représenté), le connecteur 13 comporte une tige 30t ayant à la fois un filetage externe et un filetage interne.

Ainsi, on peut avantageusement décliner par pair, triplette ou plus les étagements du connecteur 13 afin qu'il puisse servir à plusieurs tiges 21 ayant des dimensions transversales différentes. Ce qui permet d'éviter le changement de connecteurs 13, entre deux mesures concernant des appareils de pose ayant des tiges 21 avec des dimensions transversales différentes, dans la limite des géométries et longueurs admissibles et cohérentes desdites tiges filetées 21.

Selon une alternative, le piston 12 comporte une portion (le connecteur 13) ayant un filetage interne ou externe configurée de sorte qu'une tige 21 de l'appareil de pose 20 se visse directement sur le piston 12. Ladite portion jouant le rôle du connecteur 13 relie mécaniquement la tige 21 avec le piston 21. Autrement dit, le connecteur 13 est formé par une portion du piston 12, de sorte que le connecteur 13 et le piston 12 forment une pièce monobloc.

Pour réaliser une mesure de l'effort appliqué par l'appareil de pose 20, ce dernier est verrouillé sur le dispositif de mesure 10 en vissant la tige filetée 21 sur le connecteur fileté 13. De ce fait, lorsque l'appareil de pose 20 applique un effort, simulant une opération de pose d'un élément à sertir, la tige 21 impose un effort axial Fa sur le connecteur 13, autrement dit sur le piston 12. L'effort axial Fa imposé par la tige 21 entraîne alors une course du piston 12 selon l'axe longitudinal (Ox) dans la chambre hydraulique 11.

L'agencement de la chambre hydraulique 11, du piston 12, et du connecteur fileté 13 et leur coopération avec la tige 21 d'un appareil de pose 20, permettent ainsi de transformer un effort axial Fa appliqué par la tige 21 en une pression hydraulique associée P créée par le piston 12 dans la chambre hydraulique 11. De ce fait, pour quantifier l'effort appliqué Fa par l'appareil de pose 20, il est judicieux de mesurer la pression P associée.

Ainsi, le dispositif de mesure 10 comporte un manomètre 14 communiquant avec la chambre hydraulique 11. Le manomètre 14 est configuré de sorte à mesurer la pression P au sein de la chambre hydraulique 11 créée par l'effort axial Fa appliqué au piston 12 par la tige filetée 21 de l'appareil de pose 20.

Préférentiellement, le manomètre 14 est un manomètre compact et configuré pour mesurer une pression allant de 0 à 400 bars. A titre d'exemple, le manomètre 14 est un manomètre de type électronique à affichage digital, par exemple un manomètre EDS3000 commercialisé par la société HYDAC.

En mesurant la pression P par le manomètre 14, une mesure de l'effort axial Fa appliqué par la tige filetée 21 peut alors être déduite en fonction des dimensions du piston 12, de la chambre hydraulique 11 et des caractéristiques physiques du fluide 11'.

Selon un mode préférentiel de réalisation, le dispositif de mesure 10 comporte un afficheur 15 connecté au manomètre 14. L'afficheur 15 est configuré pour retranscrire la pression mesurée P par le manomètre 14 en une valeur de l'effort axial Fa appliqué par la tige filetée 21 sur le connecteur 13.

L'afficheur 15 comporte préférentiellement une unité de calcul et un écran d'affichage. L'unité de calcul permet de traiter les mesures récoltées par le manomètre 14 et de calculer la valeur de l'effort axial correspondante. L'écran d'affichage peut être un écran à cristaux liquides (LCD), à diodes, à aiguille ou tout autre système connu d'affichage, connecté à l'unité de calcul et configuré préférentiellement, pour afficher la valeur de l'effort axial calculée.

Selon une alternative, l'afficheur 15 est configuré de sorte à fournir à une indication qualitative sur l'effort axial mesuré par le manomètre 14. A titre d'exemple, l'afficheur peut comporter un ou plusieurs voyants lumineux qui s'activent lorsque l'effort axial mesuré est supérieur à un seuil prédéterminé, ou compris dans une fourchette prédéterminée. Ce type d'affichage n'indique pas une valeur de l'effort mesuré mais une caractérisation qualitative de l'effort mesuré.

Selon un mode de réalisation préférentiel, le dispositif de mesure 10 comporte un accumulateur électrique 18 configuré pour alimenter en énergie électrique des éléments du dispositif de mesure 10. Notamment, l'accumulateur 18 peut alimenter en énergie électrique le manomètre 14 et l'afficheur 15. A titre d'exemple, l'accumulateur électrique 18 peut comporter une pile d'un voltage prédéfini.

Classiquement, un appareil de pose d'un élément à sertir comporte une tige filetée (interne ou externe), communément appelée tirant, adaptée pour tirer, visser et dévisser une première partie coopérante de l'élément à sertir. L'appareil de pose comporte également un contre-appui configuré pour l'appui d'une deuxième partie de l'élément à sertir. Un mouvement axial entre la tige et le contre-appui, provoque un mouvement équivalent entre les première et deuxième parties correspondantes de l'élément à sertir, générant par exemple un bourrelet de sertissage.

Ainsi, pour simuler au mieux l'action de sertissage de l'appareil de pose 20, le dispositif de mesure 10 comporte une enclume 17 destinée à recevoir un contre-appui 22 de l'appareil de pose 20.

L'agencement de l'enclume 17 et du connecteur taraudé 13 est configuré de sorte à verrouiller l'appareil de pose 20 sur le dispositif de mesure 10. Le verrouillage est réalisé en vissant la tige filetée 21 de l'appareil de pose 20 sur le connecteur fileté 13 et en plaçant le contre-appui 22 de l'appareil de pose 20 contre l'enclume 17, avant d'appliquer un effort sur le piston, pour éviter les chocs entre l'enclume 17 et le contre-appui 22.

Selon un mode de réalisation préférentiel, le piston 12 et la chambre hydraulique 11 sont configurés de sorte que le piston 12 puisse avoir une course selon l'axe longitudinal (Ox) d'au moins 0,2 mm. Cette course minimale permet avantageusement d'éviter tout effet « choc » pendant la mesure.

La transformation d'un effort axial en une pression hydraulique, et les agencements avantageux des différents éléments du dispositif, notamment le piston et la chambre hydraulique, permettent une simulation fidèle de l'opération de sertissage lors de la mesure de l'effort axial. En outre, ils permettent de s'affranchir de l'effet « choc » se produisant dans une cellule d'effort « indéformable » telle qu'une cellule piézoélectrique classique.

Ainsi, une mesure de l'effort axial appliqué par un appareil de pose avec une meilleure précision est avantageusement effectuée par le dispositif de mesure selon l'un quelconque des modes de réalisation décrits ci-dessus. De plus, le dispositif de mesure 10 permet une mesure immédiate dans une durée très courte, typiquement une seconde. Ainsi, son utilisation ne perturbe pas le bon déroulement des opérations d'assemblage, notamment dans une chaîne de montage.

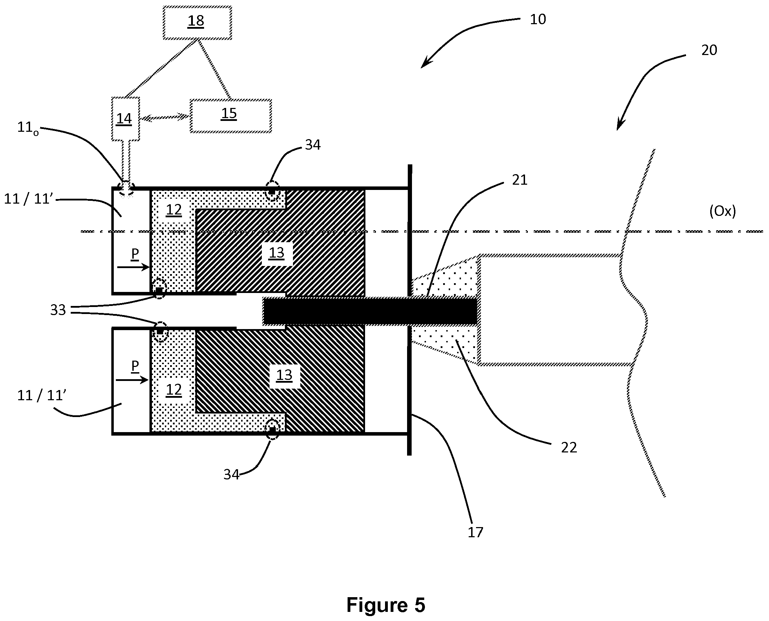

Selon un autre mode de réalisation illustré à la figure 5, le piston 12 et la chambre hydraulique 11 sont agencés de sorte que l'effort axial Fa imposé au piston 12 entraîne une dépressurisation de la chambre hydraulique 11, autrement dit une diminution de la pression P au sein de la chambre hydraulique 11, lors de la mesure de l'effort. Dans ces conditions, le manomètre 14 est configuré pour mesurer une diminution de la pression P dans la chambre hydraulique 11. Selon ce mode de réalisation, lorsque l'appareil de pose 20 est verrouillé sur le dispositif de mesure 10, le piston 12 est interposé entre la chambre hydraulique 11 et l'appareil de pose 20.

Par ailleurs, selon le mode de réalisation illustré à la figure 1, lors de la mesure de l'effort Fa appliqué par la tige 21, le piston 12 engendre une pressurisation de la chambre hydraulique 11, autrement dit une augmentation de la pression P au sein de la chambre hydraulique 11. Lorsque l'appareil de pose 20 est verrouillé sur le dispositif de mesure 10, selon le mode de réalisation de la figure 1, la chambre hydraulique 11 est interposée entre le piston 12 et l'appareil de pose 20.

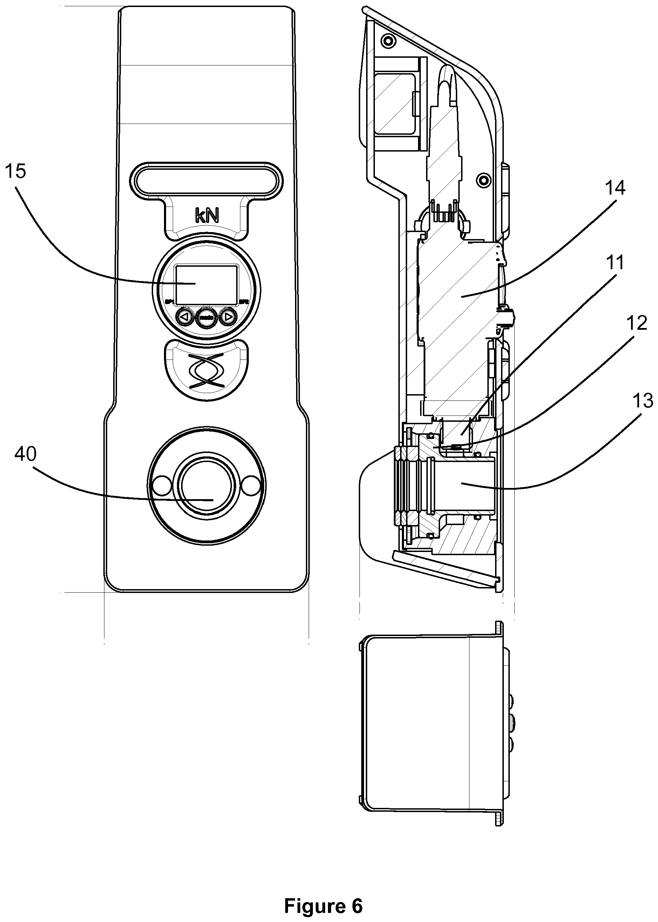

L'utilisation d'une chambre hydraulique et les agencements des différents éléments du dispositif, notamment le piston et la chambre hydraulique, permettent avantageusement de réaliser un dispositif de mesure de l'effort compact, léger et facile à réaliser. En effet, le dispositif de mesure 10 réalisé et illustré à la figure 6, a préférentiellement des dimensions selon un repère orthonormé inférieures respectivement à 244, 85 et 65 mm. Le dispositif est avantageusement léger, et il pèse préférentiellement moins de 0,8 kg.

Le dispositif de mesure de l'effort 10 est portatif et peut être tenu et manipulé par une seule main. Ainsi, le dispositif de mesure est avantageusement pratique et facile à manipuler par un opérateur.

En outre, le dispositif de mesure de l'effort permet de mesurer un effort compris entre 3 kN et 40 kN, une plage de mesures couvrant la plupart des efforts appliqués par une sertisseuse portative classique.

## Revendications

1. Dispositif de mesure d'effort (10) appliqué par un appareil de pose (20) d'un élément à sertir, ledit appareil étant muni d'une tige filetée (21) ayant un filetage interne ou externe, dispositif comportant :
- une chambre hydraulique (11) comportant un fluide (11') et s'étendant selon un axe longitudinal (Ox) ;
- un piston (12) configuré pour coulisser à l'intérieur de la chambre hydraulique (11) selon l'axe (Ox) et entrâiné en déplacement par un effort axial (Fa) imposé par la tige filetée (21) sur le piston (12) même ;
- un connecteur fileté (13) fixé au piston (12), le connecteur fileté (13) ayant un filetage externe ou interne configuré pour que la tige filetée (21) se visse sur le connecteur fileté (13) ; et
- un manomètre (14) communiquant avec la chambre hydraulique (11), et configuré pour mesurer une pression (P) au sein de la chambre hydraulique (11),
**caractérisé en ce qu'**il comporte une enclume (17) destinée à recevoir un contre-appui (22) de l'appareil de pose (20) de sorte à verrouiller l'appareil de pose (20) sur le dispositif (10) en vissant la tige filetée (21) sur le connecteur fileté (13) et en plaçant le contre-appui (22) contre l'enclume (17), et
- **en ce que** le manomètre (14) est configuré pour mesurer une augmentation de pression (P) au sein de la chambre hydraulique (11) lorsque la tige filetée (21) translate dans la direction du contre-appui (22).

2. Dispositif selon la revendication 1, dans lequel un afficheur (15) connecté au manomètre (14) est configuré pour retranscrire la pression mesurée (P) par le manomètre (14) en une valeur de l'effort axial (Fa).

3. Dispositif selon l'une des revendications précédentes, dans lequel le piston (12) et la chambre hydraulique (11) sont configurés de sorte que le piston (11) puisse avoir une course selon l'axe longitudinal (Ox) d'au moins 0,2 mm.

4. Dispositif selon l'une des revendications précédentes, dans lequel le connecteur fileté (13) est formé par une portion du piston (12), le connecteur fileté (13) et le piston (12) formant une pièce monobloc.

5. Dispositif selon l'une quelconque des revendications 1 à 3, comportant un jeu de pièces interchangeables (13i), chaque pièce (13i) du jeu étant configurée pour former le connecteur fileté (13).

6. Dispositif selon la revendication 5, dans lequel le jeu de pièces interchangeable (13i) comporte des pièces adaptées à recevoir la tige filetée (21) ayant un profil de filetage choisi parmi : un profil sapin, un profil carré, un profil tronqué, un profil conique, un profil à pas décalé.

7. Dispositif selon l'une des revendications précédentes, comportant un accumulateur électrique (18) configuré pour alimenter en énergie électrique des éléments du dispositif de mesure (10).

8. Procédé de mesure d'effort appliqué par un appareil de pose (20) d'un élément à sertir, l'appareil de pose (20) étant muni d'une tige filetée (21) ayant un filetage interne ou externe, dans lequel :
- on fournit un dispositif de mesure d'effort (10) comprenant une chambre hydraulique (11) comportant un fluide (11') et s'étendant selon un axe longitudinal (Ox) ; un piston (12) configuré pour coulisser à l'intérieur de la chambre hydraulique (11) selon l'axe (Ox) ; un connecteur fileté (13) fixé au piston (12), le connecteur fileté (13) ayant un filetage externe ou interne ; et un manomètre (14) communiquant avec la chambre hydraulique (11),
**caractérisé en ce que** :
- le dispositif (10) comporte en outre une enclume (17) destinée à recevoir un contre-appui (22) de l'appareil de pose (20) de sorte à verrouiller l'appareil de pose (20) sur le dispositif (10) en vissant la tige filetée (21) sur le connecteur fileté (13) et en plaçant le contre-appui (22) contre l'enclume (17), et **en ce que**
- la tige filetée (21) impose un effort axial (Fa) sur le piston (12) entraînant une course du piston (12), selon l'axe (Ox), dans la chambre hydraulique (11) ; et
- on mesure une augmentation de pression (P) au sein de la chambre hydraulique (11) lorsque la tige filetée (21) translate dans la direction du contre-appui (22).

## Patentansprüche

1. Vorrichtung (10) zur Messung des Kraftaufwands, der von einem Gerät (20) zum Einsetzen eines zu crimpenden Elements aufgebracht wird, wobei das Gerät mit einer Gewindestange (21) versehen ist, die ein Innen- oder Außengewinde hat, wobei die Vorrichtung Folgendes umfasst:
- eine Hydraulikkammer (11), die ein Fluid (11') aufweist und sich gemäß einer Längsachse (Ox) erstreckt;
- einen Kolben (12), der dafür ausgelegt ist, sich im Inneren der Hydraulikkammer (11) gemäß der Achse (Ox) zu verschieben und durch einen axialen Kraftaufwand (Fa) in Bewegung gesetzt wird, welcher von der Gewindestande (21) auf den Kolben (12) selbst ausgeübt wird;
- ein Verbindungsstück (13) mit Gewinde, das an dem Kolben (12) befestigt ist, wobei das Verbindungsstück (13) mit Gewinde ein Außen- oder Innengewinde hat, das derart ausgelegt ist, dass die Gewindestange (21) an dem Verbindungsstück (13) mit Gewinde festgeschraubt werden kann; und
- ein Manometer (14), das mit der Hydraulikkammer (11) in Verbindung steht und dafür ausgelegt ist, einen Druck (P) innerhalb der Hydraulikammer (11) zu messen,
**dadurch gekennzeichnet, dass** sie einen Amboss (17) aufweist, der dazu bestimmt ist, eine Gegenstütze (22) des Einsetzgeräts (20) derart aufzunehmen, dass das Einsetzgerät (20) an der Vorrichtung (10) verriegelt wird, indem die Gewindestange (21) an dem Verbindungsstück (13) mit Gewinde festgeschraubt wird und indem die Gegenstütze (22) auf dem Amboss (17) in Anlage gebracht wird,
- dadurch, dass das Manometer (14) dafür ausgelegt ist, eine Erhöhung des Drucks (P) innerhalb der Hydraulikkammer (11) zu messen, wenn die Gewindestange (21) eine Translation in Richtung der Gegenstütze (22) erfährt.

2. Vorrichtung nach Anspruch 1, wobei eine Anzeige (15), die mit dem Manometer (14) in Verbindung steht, dafür ausgelegt ist, den Druck (P), welcher von dem Manometer (14) gemessen wurde, schriftlich als einen Wert des axialen Kraftaufwands (Fa) wiederzugeben.

3. Vorrichtung nach einem der vorhergehenden Ansprüche, wobei der Kolben (12) und die Hydraulikkammer (11) derart ausgelegt sind, dass der Hub des Kolbens (11) gemäß der Längsachse (Ox) mindestens 0,2 mm betragen kann.

4. Vorrichtung nach einem der vorhergehenden Ansprüche, wobei das Verbindungsstück (13) mit Gewinde aus einem Abschnitt des Kolbens (12) gebildet ist, wobei das Verbindungsstück (13) mit Gewinde und der Kolben (12) ein einstückiges Element bilden.

5. Vorrichtung nach einem beliebigen der Ansprüche 1 bis 3, die einen Satz austauschbarer Stücke (13i) aufweist, wobei jedes Stück (13i) des Satzes dafür ausgelegt ist, das Verbindungsstück (13) mit Gewinde zu bilden.

6. Vorrichtung nach Anspruch 5, wobei der Satz von austauschbaren Stücken (13i) Stücke aufweist, die dafür geeignet sind, die Gewindestange (21) aufzunehmen, welche ein Gewindeprofil hat, das aus den folgenden ausgewählt ist: einem Tannenbaumprofil, einem Quadratprofil, einem trunkierten Profil, einem konischen Profil, einem Profil mit versetztem Gewindegang.

7. Vorrichtung nach einem der vorhergehenden Ansprüche, wobei es einen elektrischen Akkumulator (18) aufweist, der dafür ausgelegt ist, Elemente der Messvorrichtung (10) mit elektrischer Energie zu versorgen.

8. Verfahren zur Messung des Kraftaufwands, der von einem Gerät (20) zum Einsetzen eines zu crimpenden Elements aufgebracht wird, wobei das Einsetzgerät (20) mit einer Gewindestange (21) versehen ist, die ein Innen- oder Außengewinde hat, wobei:
- eine Vorrichtung (10) zur Messung des Kraftaufwands bereitgestellt wird, die eine Hydraulikkammer (11), welche ein Fluid (11') aufweist und sich gemäß einer Längsachse (Ox) erstreckt; einen Kolben (12), welcher dafür ausgelegt ist, sich im Inneren der Hydraulikkammer (11) gemäß der Achse (Ox) zu verschieben; ein Verbindungsstück (13) mit Gewinde, welches an dem Kolben (12) befestigt ist, wobei das Verbindungsstück (13) mit Gewinde ein Außen- oder Innengewinde hat; und ein Manometer (14) umfasst, welches mit der Hydraulikkammer (11) in Verbindung steht,
**dadurch gekennzeichnet, dass**:
- die Vorrichtung (10) darüber hinaus einen Amboss (17) aufweist, der dazu bestimmt ist, eine Gegenstütze (22) des Einsetzgeräts (20) derart aufzunehmen, dass das Einsetzgerät (20) an der Vorrichtung (10) verriegelt wird, indem die Gewindestange (21) an dem Verbindungsstück (13) mit Gewinde festgeschraubt wird und indem die Gegenstütze (22) auf dem Amboss (17) in Anlage gebracht wird, und dadurch, dass
- die Gewindestange (21) einen axialen Kraftaufwand (Fa) auf den Kolben (12) ausübt, wobei dies einen Hub des Kolbens (12), gemäß der Achse (Ox), in der Hydraulikkammer (11) bewirkt; und
- eine Erhöhung des Drucks (P) innerhalb der Hydraulikkammer (11) gemessen wird, wenn die Gewindestange (21) eine Translation in Richtung der Gegenstütze (22) erfährt.

## Claims

1. Device (10) for the measurement of the force applied by a fitting apparatus (20) of an element to be crimped, said apparatus being provided with a threaded rod (21) having an internal or external thread, device comprising:
- a hydraulic chamber (11) comprising a fluid (11') and extending along a longitudinal axis (Ox);
- a piston (12) configured to slide inside the hydraulic chamber (11) along the axis (Ox) and moved by an axial force (Fa) imposed by the threaded rod (21) on the said piston;
- a threaded connector (13) fixed to the piston (12), the threaded connector (13) having an external or internal thread configured in such a way that the threaded rod (21) screws onto the threaded connector (13); and
- a pressure gauge (14) communicating with the hydraulic chamber (11) and configured to measure a pressure (P) inside the hydraulic chamber (11),
**characterized in that** the device comprises an anvil (17) designed to receive a counter-support (22) of the fitting apparatus (20) so as to secure the fitting apparatus (20) on the device (10) by screwing the threaded rod (21) onto the threaded connector (13) and placing the counter-support (22) against the anvil (17),
**in that** the pressure gauge (14) is configured to measure an increase of the pressure (P) inside the hydraulic chamber (11) when the threaded rod (21) moves in translation in the direction of the counter-support (22).

2. Device according to claim 1, wherein a display (15) connected to the pressure gauge (14) is configured to transpose the pressure (P) measured by the pressure gauge (14) into an axial force value (Fa).

3. Device according to one of the foregoing claims, wherein the piston (12) and the hydraulic chamber (11) are configured in such a way that the piston (12) can have a travel along the longitudinal axis (Ox) of at least 0.2 mm

4. Device according to one of the foregoing claims, wherein the threaded connector (13) is formed by a portion of the piston (12), the threaded connector (13) and the piston (12) forming a monoblock part.

5. Device according to any one of claims 1 to 3, comprising a set of interchangeable parts (13i), each part (13i) of the set being configured to form the threaded connector (13).

6. Device according to claim 5, wherein the set of interchangeable parts (13i) comprises parts designed to receive the threaded rod (21) having a threading profile chosen from: a conifer profile, a square profile, a truncated profile, a conical profile, an offset pitchs profile.

7. Device according to one of the foregoing claims, comprising a rechargeable electric battery (18) configured to supply electric power to elements of the measuring device (10).

8. Process for the measurement of the force applied by a fitting apparatus (20) of an element to be crimped, the fitting apparatus (20) being provided with a threaded rod (21) having an internal or external thread, wherein:
- providing a device (10) for the measurement of the force comprising a hydraulic chamber (11) comprising a fluid (11') and extending along a longitudinal axis (Ox); a piston (12) configured to slide inside the hydraulic chamber (11) along the axis (Ox); a threaded connector (13) fixed to the piston (12), the threaded connector (13) having an external or internal thread; and a pressure gauge (14) communicating with the hydraulic chamber (11),
**characterized in that**:
- the device (10) further comprises an anvil (17) designed to receive a counter-support (22) of the fitting apparatus (20) so as to secure the fitting apparatus (20) on the device (10) by screwing the threaded rod (21) onto the threaded connector (13) and placing the counter-support (22) against the anvil (17), and **in that**
- the threaded rod (21) imposes an axial force (Fa) on the piston (12) resulting in travel of the piston (12), along the axis (Ox), inside the hydraulic chamber (11); and
- measuring an increase of the pressure (P) inside the hydraulic chamber (11) when the threaded rod (21) moves in translation in the direction of the counter-support (22).
